(19) Europäisches Patentamt
European Patent Office
Office européen des brevets

(11) **EP 1 271 618 A2**

(12) **EUROPÄISCHE PATENTANMELDUNG**

(43) Veröffentlichungstag:
02.01.2003 Patentblatt 2003/01

(51) Int Cl.[7]: **H01J 61/44**, C09K 11/77

(21) Anmeldenummer: 02100742.2

(22) Anmeldetag: 21.06.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **22.06.2001 DE 10130330**

(71) Anmelder:
- **Philips Corporate Intellectual Property GmbH 20099 Hamburg (DE)**
  Benannte Vertragsstaaten:
  **DE**
- **Koninklijke Philips Electronics N.V. 5621 BA Eindhoven (NL)**
  Benannte Vertragsstaaten:
  **FR GB**

(72) Erfinder:
- **Jüstel, Thomas**
  **c/o Philips Corp. Intel.Prop. GmbH**
  **52066, Aachen (DE)**
- **Mayr, Walter c/o Philips Corp. Intel.Prop. GmbH**
  **52066, Aachen (DE)**
- **Wiechert, Detlef**
  **52066, Aachen (DE)**
- **Lade, Hartmut**
  **52066, Aachen (DE)**

(74) Vertreter: **Volmer, Georg, Dipl.-Ing. et al**
**Philips Corporate Intellectual Property GmbH,**
**Postfach 50 04 42**
**52088 Aachen (DE)**

(54) **Gasentladungslampe für dielektrisch behinderte Entladungen mit blauem Leuchtstoff**

(57) Die Erfindung betrifft eine Gasentladungslampe für dielektrisch behinderte Entladungen, die ein mit einer Gasfüllung gefülltes Entladungsgefäß mit mindestens einer Wandung aus einem dielektrischen Material, mit mindestens einer Wandung mit einer für sichtbare Strahlung mindestens teilweise transparenten Fläche und mit einer Leuchtstoffschicht, die einen blauen Leuchtstoff mit einem Wirtsgitter und $Nd^{3+}$ als Aktivator enthält, Elektroden für eine dielektrisch behinderte Entladung und Mittel zur Zündung und Aufrechterhaltung der Entladung umfasst.

Die Erfindung betrifft weiterhin einen blauen Leuchtstoff mit einem Wirtsgitter und $Nd^{3+}$ als Aktivator.

**EP 1 271 618 A2**

**Beschreibung**

Die Erfindung betrifft eine Gasentladungslampe für dielektrisch behinderte Entladungen, die mit einem mit einer Gasfüllung gefüllten Entladungsgefäß, das mindestens eine Wandung, die aus einem dielektrischen Material besteht, und mindestens eine Wandung mit einer für sichtbare Strahlung mindestens teilweise transparenten Fläche mit einer Leuchtstoffschicht, die einen blauen Leuchtstoff enthält, umfasst, mit einer Elektrodenstruktur für eine dielektrisch behinderte Entladung und mit Mitteln zur Zündung und Aufrechterhaltung der dielektrisch behinderten Entladung ausgerüstet ist.

Gasentladungslampen für dielektrisch behinderte Entladungen werden insbesondere in Geräten für die Büroautomation, z.B. Farbkopierern und Farbscannern, für die Signalbeleuchtung, z. B. als Brems- und Richtungsanzeigelicht in Automobilen, für Hilfsbeleuchtungen, z. B. der Innenbeleuchtung von Automobilen sowie insbesondere auch für die Hintergrundbeleuchtung von Anzeigen und Bildschirmen, z. B. von Flüssigkristallanzeigen, eingesetzt.

Für die genannten Anwendungen ist nicht nur eine über die Länge der Lampe gleichmäßige, sondern auch eine hohe Leuchtdichte notwendig. Um die Leuchtdichte zu steigern, muss mehr Leistung in das System eingekoppelt werden. Das belastet aber u.a. auch die Leuchtstoffe in der Leuchtstoffschicht stärker. Mit zunehmender Leistungseinkopplung degradieren die Leuchtstoffe schneller und die Lichtausbeute nimmt während des Betriebes schneller ab.

Besonders Gasentladungslampen mit dielektrisch behinderter Entladung, die blaue Leuchtstoffe mit $Eu^{2+}$ als Aktivator, z. B. $BaMgAl_{10}O_{17}:Eu^{2+}$, enthalten, sind von der Degradation betroffen.

Als weniger degradierender blauer Leuchtstoff für Gasentladungslampen mit dielektrisch behinderter Entladung sind aus EP 0433 916 die Leuchtstoffe $CaWO_4$ und $Sr_2P_2O_7:Sn$ bekannt.

Es ist eine Aufgabe der vorliegenden Erfindung, eine Gasentladungslampe für dielektrische behinderte Entladungen mit einer Leuchtstoffschicht, die einen blauen Leuchtstoff enthält, mit verbesserter Anpassung des Leuchtstoffs an die dielektrisch behinderte Entladung zur Verfügung zu stellen.

Erfindungsgemäß wird die Aufgabe gelöst durch eine Gasentladungslampe für dielektrisch behinderte Entladungen, die ein mit einer Gasfüllung gefülltes Entladungsgefäß mit mindestens einer Wandung aus einem dielektrischen Material, mit mindestens einer Wandung mit einer für sichtbare Strahlung mindestens teilweise transparenten Fläche und mit einer Leuchtstoffschicht, die einen blauen Leuchtstoff mit einem Wirtsgitter und $Nd^{3+}$ als Aktivator enthält, Elektroden für eine dielektrisch behinderte Entladung und Mittel zur Zündung und Aufrechterhaltung der Entladung umfasst.

In einer Gasentladungslampe mit einer Leuchtstoffschicht, die einen blauen Leuchtstoff mit einem Wirtsgitter mit $Nd^{3+}$ als Aktivator enthält, ist die Degradation des Leuchtstoffs vermindert und der Farbpunkt der Lampe bleibt unverändert. Außerdem kann durch geeignete Wahl des Wirtsgitters das Absorptionsvermögen des Leuchtstoffes für UV-Strahlung an die Emission der Gasentladung angepasst werden.

Der Erfindung liegt auch die Erkenntnis zugrunde, dass die Degradation von Leuchtstoffen mit $Eu^{2+}$ als Aktivator in Gasentladungslampen für dielektrisch behinderte Entladungen durch Photooxidation des $Eu^{2+}$ durch die VUV-Strahlung der Gasentladungslampe mit einer Wellenlänge zwischen 100 und 200 nm bewirkt wird, während unter Anregung mit längerwelligem Licht mit einer Wellenlänge von 200 bis 400 nm kein Effizienzverlust zu beobachten ist. Es wurde gefunden, dass diese Photooxidation des Leuchtstoffs wegfällt, wenn der Leuchtstoff $Nd^{3+}$ als Aktivator enthält.

Nach einer bevorzugten Ausführungsform der Erfindung besteht das Wirtsgitter aus einem anorganischen Material ausgewählt aus der Gruppe der Oxide, Sulfide, Halogenide, Aluminate, Gallate, Thiogallate, Phosphate , Borate und Silikate.

Es ist besonders bevorzugt, dass der Leuchtstoff aus der Gruppe $(Y_{1-x}Gd_x)SiO_5:Nd$, $(Y_{1-x}Gd_x)BO_3:Nd$, $(La_{1-x}Y_x)PO_4:Nd$ und $(Y_{1-x}Gd_x)_2O_3:Nd$ mit $0 \leq x \leq 1$ ausgewählt ist.

Im Rahmen der vorliegenden Erfindung ist es bevorzugt, dass die Leuchtstoffschicht einen zweiten blauen Leuchtstoff ausgewählt aus der Gruppe $(Ba,Sr)MgAl_{10}O_{17}:Eu^{2+}$; $(Y_{1-x}La_x)_2SiO_5:Ce$ mit $0 \leq x \leq 1$ und $(Ba_{1-x-y}Sr_xCa_y)_5(PO_4)_3Cl:Eu$ mit $0 \leq x \leq 1$ und mit $0 \leq y \leq 1$ enthält.

Die Erfindung betrifft weiterhin einen blauen Leuchtstoff mit einem Wirtsgitter und $Nd^{3+}$ als Aktivator. Ein derartiger Leuchtstoff kann vorteilhaft auch für die Leuchtstoffschicht von farbigen Plasmabildschirmen verwendet werden.

Nachfolgend wird die Erfindung anhand von zwei Ausführungsbeispielen weiter erläutert.

Eine Gasentladungslampe für dielektrisch behinderte Entladungen nach der Erfindung umfasst ein Entladungsgefäß mit einer Gasfüllung mit mindestens einer Wandung, die aus einem dielektrischen Material besteht und mit mindestens einer Wandung, die eine für sichtbare Strahlung mindestens teilweise transparente Fläche mit einer Leuchtstoffschicht aufweist. Die Leuchtstoffschicht enthält eine Leuchtstoffzubereitung mit einem blauen Leuchtstoff aus einem anorganischen, kristallinen Wirtsgitter, der seine Leuchtfähigkeit durch eine Aktivierung mit einer $Nd^{3+}$-Dotierung erworben hat. Außerdem ist die Gasentladungslampe mit Elektroden für eine dielektrisch behinderte Entladung und mit Mitteln zur Zündung und Aufrechterhaltung der dielektrisch behinderten Entladung ausgerüstet.

In einer typische Bauform für die Gasentladungslampe besteht diese aus einem zylindrischen, mit Xenon gefüllten Lampenkolben aus Glas, auf dessen Wandung außen ein Paar streifenförmiger Elektroden elektrisch isoliert voneinander angeordnet ist. Die streifenförmigen Elektroden erstrecken sich über die gesamte Länge des Lampenkolbens, wobei sie sich mit ihren Längsseiten unter Freilassung von zwei Spalten gegenüberliegen. Die Elektroden sind an die Pole einer Hochspannungsquelle angeschlossen, die mit einer Wechselspannung in der Größenordnung von 20 kHz bis 500 kHz derart betrieben wird, dass sich eine elektrische Entladung nur im Bereich der inneren Oberfläche des Lampenkolbens bildet.

Wenn eine Wechselstromspannung an die Elektroden angelegt wird, kann in dem xenonhaitigen Füllgas eine stille elektrische Ladung gezündet werden. Dadurch bilden sich im Xenon Excimere, d. h. Moleküle , die nur im angeregten Zustand stabil sind.

$$Xe + Xe^* = Xe_2^*$$

Die Anregungsenergie wird als UV-Strahlung mit einer Wellenlänge von $\lambda$ = 160 bis 190 nm wieder abgegeben. Diese Umwandlung von Elektronenenergie in UV-Strahlung erfolgt sehr effizient. Die erzeugten UV-Photonen werden von den Leuchtstoffen der Leuchtstoffschicht absorbiert und die Anregungsenergie wird in dem längerwelligen Bereich des Spektrums teilweise wieder abgegeben.

Grundsätzlich sind für das Entladungsgefäß eine Vielzahl von Bauformen wie Platten, einfache Rohre, Koaxialrohre, gerade, u-förmig, kreisförmig gebogene oder gewendelte, zylinderförmige oder anders geformte Entladungsröhren möglich.

Als Material für das Entladungsgefäßes werden z. B. Quarz oder Glas verwendet.

Die Elektroden bestehen z. B. aus einem Metall wie Aluminium oder Silber, einer Metall-Legierung oder aus einer transparenten leitfähigen anorganischen Verbindung z. B. ITO. Sie können als Beschichtung, als aufgeklebte Folie, als Draht oder als Drahtnetz ausgebildet sein.

Um die Lichtstärke in eine bestimmte Richtung zu bündeln, kann ein Teil des Entladungsgefäßes mit einer Beschichtung versehen werden, die als Reflektor für VUV - und UV-C-Licht wirkt.

Das Entladungsgefäß ist mit einem Gasgemisch, das ein Edelgas wie Xenon, Krypton, Neon oder Helium enthält, gefüllt. Gasfüllungen, die überwiegend aus sauerstofffreiem Xenon bestehen, sind bevorzugt.

Die Innenwandung des Gasentladungsgefäßes ist teilweise oder ganz mit einer Leuchtstoffschicht, die ein oder auch mehrere Leuchtstoffe bzw. Leuchtstoffzubereitungen enthält, beschichtet. Weiterhin kann die Leuchtstoffschicht noch ein organisches oder anorganisches Bindemittel oder eine Bindemittelzusammensetzung enthalten.

Der Leuchtstoff ist ein Leuchtstoff mit dem $Nd^{3+}$-Ion als Aktivator in einem Wirtsgitter. Das Neodym$^{3+}$-Ion wird nur sehr schwer zu $Nd^{4+}$ oxidiert.

Das Wirtsgitter kann aus einem anorganischen Material wie Oxiden, Sulfiden, Halogeniden, Aluminaten, Gallaten, Thiogallaten, Phosphaten , Boraten oder Silikaten bestehen, das mit einigen Prozent des Aktivators dotiert ist.

Das Wirtsgitter beteiligt sich nicht an dem Lumineszenzprozess, es beeinflusst aber die genaue Lage der Energieniveaus des Aktivatorions, und infolgedessen die Wellenlängen von Absorption und Emission.

Die $Nd^{3+}$-aktivierten Leuchtstoffe, die gemäß der Erfindung verwendet werden, sind in erster Linie Leuchtstoffe mit einem Wirtsgitter, das ein schwaches Ligandenfeld ausübt, insbesondere die sauerstoffhaltigen Wirtsgitter aus Oxide, Aluminate, Gallate, Phosphate , Borate oder Silikate. In diesen Leuchtstoffen liegt der niedrigste angeregte 4f5d-Zustand 43000 cm$^{-1}$ über dem Grundzustand, also oberhalb von 230 nm. Deshalb sind diese $Nd^{3+}$-aktivierten Leuchtstoffe besonders effiziente Leuchtstoffe unter Vakuum-UV-Anregung. Das $Nd^{+3}$-Ion zeigt als Aktivator in den verschiedenen Wirtsgittern meist breite Absorptionsbanden im Ultravioletten, teilweise bis ins Blaue reichend. Die Emissionsbanden liegen im Bereich vom langen Ultraviolett bis zum Gelborange, jedoch überwiegend im Blau. Die Löschtemperatur dieser Leuchtstoffe liegt bei über 100°C.

Die $Nd^{3+}$- aktivierten Leuchtstoffe enthalten bevorzugt 0.1 bis 30 Mol-% Neodym$^{3+}$.

Der Absorptionskoeffizient der genannten Leuchtstoffe ist für die Wellenlängen im Bereich der Xenonstrahlung besonders groß und die Quantenausbeute hoch.

Die Korngröße der Leuchtstoffpartikel ist nicht kritisch. Üblicherweise werden die Leuchtstoffe als feinkörnige Pulver mit einer Korngrößenverteilung zwischen 1 und 20 $\mu$m verwendet.

Als Herstellungsverfahren für Leuchtstoffschicht auf einer Wandung des Entladungsgefäßes kommen sowohl Trockenbeschichtungsverfahren, wie z. B. elektrostatische Abscheidung oder elektrostatisch unterstütztes Bestäuben, als auch ein Nassbeschichtungsverfahren wie z. B. Tauchen oder Sprühen in Betracht.

Für Nassbeschichtungsverfahren muss die Leuchtstoffzubereitung in Wasser, einem organischen Lösemittel, gegebenenfalls zusammen mit einem Dispergiermittel, einem Tensid und einem Antischaummittel, oder einer Bindemittelzubereitung dispergiert werden. Geeignet für Bindemittelzubereitungen für eine Gasentladungslampe nach der Erfindung sind organische oder anorganische Bindemittel, die einer Betriebstemperatur von 250°C ohne Zersetzung , Versprödung oder Verfärbung überstehen.

Beispielsweise kann die Leuchtstoffzubereitung auf eine Wandung des Entladungsgefäßes mittels eines Flutungsverfahrens aufgebracht werden. Die Beschichtungssuspensionen für das Flutungsverfahren enthalten Wasser oder eine organischen Verbindung wie Butylacetat als Lösungsmittel. Die Suspension wird durch Zugabe von Hilfsmitteln , wie Stabilisatoren, Verflüssigern Cellulosederivaten , stabilisiert und in ihren rheologischen Eigenschaften beeinflusst. Die Leuchtstoffsuspension wird als dünne Schicht auf die Gefäßwände aufgebracht, getrocknet und bei 600°C eingebrannt.

Es kann auch bevorzugt sein, dass die Leuchtstoffzubereitung für die Leuchtstoffschicht elektrostatisch auf der Innenseite des Entladungsgefäßes abgeschieden wird.

Für eine Gasentladungslampe für dielektrisch behinderte Entladungen, die weißes Licht abstrahlen soll, werden bevorzugt ein blauemittierender Leuchtstoff aus der Gruppe $(Y_{1-x}Gd_x)SiO_5$:Nd, $(Y_{1-x}Gd_x)BO_3$:Nd, $(La_{1-x}Y_x)PO_4$:Nd und $(Y_{1-x}Gd_x)_2O_3$:Nd mit $0 \leq x \leq 1$ mit einem rotemittierenden Leuchtstoff aus der Gruppe $(Y,Gd)BO_3$:$Eu^{3+}$ und $Y(V,P)O_4$:$Eu^{3+}$ und einem grünemittierenden Leuchtstoff aus der Gruppe $(Y,Gd)BO_3$:$Tb^{3+}$, $LaPO_4$:$Ce^{3+}$,$Tb^{3+}$ und $Zn_2SiO_4$:Mn kombiniert.

Im Rahmen der vorliegenden Erfindung ist es bevorzugt, dass die Leuchtstoffschicht einen zweiten blauen Leuchtstoff ausgewählt aus der Gruppe (Ba,Sr) $MgAl_{10}O_{17}$:$Eu^{2+}$; $(Y_{1-x}La_x)_2SiO_5$:Ce mit $0 \leq x \leq 1$ und $(Ba_{1-x-y}Sr_xCa_y)_5$ $(PO_4)_3$Cl:Eu mit $0 \leq x \leq 1$ und mit $0 \leq y \leq 1$ enthält.

Die Leuchtstoffschicht hat üblicherweise eine Schichtdicke von 5 bis 100 µm.

Das Gefäß wird dann evakuiert, um alle gasförmigen Verunreinigungen, insbesondere Sauerstoff zu entfernen. Anschließend wird das Gefäß mit Xenon gefüllt und verschlossen.

Ausführungsbeispiel 1

Ein zylindrisches Entladungsgefäß aus Glas mit eine Länge von 590 mm, einem Durchmesser von 10 mm und einer Wandstärke von 0,8 mm wird mit Xenon bei einem Druck von 200 hPa gefüllt. Das Entladungsgefäß enthält eine achsparallele Innenelektrode in Form eines Edelmetallstabs mit 2,2 mm Durchmesser. Auf der Außenfläche des Entladungsgefäßes befindet sich die Außenelektrode aus zwei 2 mm breiten Streifen aus Leitsilber, die achsparallel angeordnet und mit der Spannungsversorgung leitend verbunden sind. Die Lampe wird mit gepulster Gleichspannung betrieben.

Die Innenwand des Entladungsgefäßes ist mit einer Leuchtstoffschicht beschichtet. Die Leuchtstoffschicht enthält ein Dreibandenleuchtstoffgemisch mit folgenden Komponenten $Y_2SiO_5$:Nd(1%) als blaue Komponente, $Y_2O_3$:Eu als rote Komponente und $Y_2SiO_5$:Tb als grüne Komponente.

Zur Herstellung des $Y_2SiO_5$:Nd(1%) werden 10,0g (44,38 mmol) $Y_2O_3$, 0,09 g (0,45 mmol) $NdF_3$ und 2,755 g (45,85 mmol) $SiO_2$ gründlich gemischt und in einem Achatmörser gemahlen. Die Mischung wird in Wasser suspendiert. Nach einer 10minütigen Ultraschallbehandlung wird die Suspension zur Trockene eingeengt und bei 100°C getrocknet. Anschließend wird das Gemisch mit 0,5 g CsF als Flussmittel gemischt und in einem Achatmörser vermahlen. Das Gemisch wird 2 h bei 1350°C gesintert. Das gesinterte Pulver wird erneut gemahlen und auf eine Korngröße d < 36 µm gesiebt.

Der Farbpunkt des blauen Leuchtstoffes $Y_2SiO_5$:Nd liegt bei x = 0,19 und y = 0,12.

Mit der Lampe wurde eine Lichtausbeute von anfangs 37 lm/W erzielt. Nach 1000 Betriebsstunden lag die Lichtausbeute bei 34 lm/W. Die Quantenausbeute für VUV-Licht liegt bei 70%.

**Patentansprüche**

1. Gasentladungslampe für dielektrisch behinderte Entladungen, die ein mit einer Gasfüllung gefülltes Entladungsgefäß

   mit mindestens einer Wandung aus einem dielektrischen Material,

   mit mindestens einer Wandung mit einer für sichtbare Strahlung mindestens teilweise transparenten Fläche und mit einer Leuchtstoffschicht, die einen blauen Leuchtstoff mit einem Wirtsgitter und $Nd^{3+}$ als Aktivator enthält,

   Elektroden für eine dielektrisch behinderte Entladung und

   Mittel zur Zündung und Aufrechterhaltung der Entladung umfasst.

2. Gasentladungslampe gemäß Anspruch 1, **dadurch gekennzeichnet,**
   **dass** das Wirtsgitter aus einem anorganischen Material ausgewählt aus der Gruppe der Oxide, Sulfide, Halogenide, Aluminate, Gallate, Thiogallate, Phosphate, Borate und Silikate besteht.

3. Gasentladungslampe gemäß Anspruch 1, **dadurch gekennzeichnet,**
   **dass** der Leuchtstoff aus der Gruppe $(Y_{1x}Gd_x)SiO_5$: Nd, $(Y_{1-x}Gd_x)BO_3$:Nd, $(La_{1-x}Y_x)PO_4$:Nd und $(Y_{1-x}Gd_x)_2O_3$:Nd mit $0 \leq x \leq 1$ ausgewählt ist.

4. Gasentladungslampe gemäß Anspruch 1, **dadurch gekennzeichnet,**
   **dass** die Leuchtstoffschicht einen zweiten blauen Leuchtstoff ausgewählt aus der Gruppe (Ba,Sr) $MgAl_{10}O_{17}$:$Eu^{2+}$; $(Y_{1-x}La_x)_2SiO_5$:Ce mit $0 \leq x \leq 1$ und $(Ba_{1-x-y}Sr_xCa_y)_5(PO_4)_3$Cl:Eu mit $0 \leq x \leq 1$ und mit $0 \leq y \leq 1$ enthält.

5. Blauer Leuchtstoff mit einem Wirtsgitter und mit $Nd^{3+}$ als Aktivator.